# EUROPEAN PATENT APPLICATION

(11) **EP 3 410 086 A1**
(43) Date of publication of application: **05.12.2018**
(21) Application number: 17744390.0
(22) Date of filing: 27.01.2017
(51) Int. Cl.: G01J 5/10, G01J 1/44, G01J 5/24, G01K 7/24

(54) **TEMPERATURE DETECTING CIRCUIT**

(30) Priority: 27.01.2016 JP 2016013277; 29.07.2016 JP 2016149924
(71) Applicant: Mitsubishi Materials Corporation, Chiyoda-ku Tokyo 100-8117 (JP)
(72) Inventor: NISHIYAMA Masashi, Naka-shi Ibaraki 311-0102 (JP); HIRANO Shingo, Naka-shi Ibaraki 311-0102 (JP); TARI Kazuyoshi, Saitama-shi Saitama 330-8508 (JP); NAKAMURA Kenzou, Naka-shi Ibaraki 311-0102 (JP)
(74) Representative: Hoffmann Eitle
(86) International application number: PCT/JP2017/002935
(87) International publication number: WO 2017/131160

(57) **Abstract**

To provide a temperature detection circuit that can detect the high-temperature anomaly of a fuser roller or the like with high accuracy over a wider range of temperature.

The temperature detection circuit includes a differential output detection circuit portion C1 having a detection thermistor and a compensation thermistor configured to amplify a difference between an output of the detection thermistor and an output of the compensation thermistor and to detect it as a first differential output; a second differential amplifier portion C2 configured to amplify a difference between the first differential output and the output of the compensation thermistor and to output it as a second differential output; and an AD converter portion C3 configured to convert the output of the compensation thermistor and the second differential output into digital values.

## Description

### BACKGROUND OF THE INVENTION

### [Field of the Invention]

The present invention relates to a temperature detection circuit using a thermistor that can detect a temperature of, for example, a fuser roller or the like with high accuracy.

### [Description of the Related Art]

Conventionally, a thermistor is used as a temperature sensor for measuring a temperature of an object to be measured such as a fuser roller or the like used in a copying machine, printer, or the like by detecting infrared radiation radiated from the object in a non-contact manner. In order to measure a temperature of a fuser roller or the like using such a thermistor, an apparatus uses a temperature detection circuit for detecting a temperature of the fuser roller or the like based on an output of the thermistor. Especially, since the operation of the apparatus must be stopped when the fuser roller or the like is heated to an abnormal temperature, a high-accuracy temperature detection circuit has been demanded.

For example, Patent document 1 discloses a technology using a temperature detection circuit configured to detect the surface temperature of a fuser roller based on an output of a non-contact temperature sensor. Specifically, in this temperature detection circuit, an operational amplifier receives outputs each corresponding to the voltages V_{DET} and V_{REF} of a detection-side heat sensitive element and a compensation-side heat sensitive element respectively, and then performs an arithmetical operation of these outputs so as to provide a differential output V_{DIF} (V_{DET}-V_{REF}). That is, this circuit detects the differential output V_{DIF} as an output corresponding to the surface temperature of the fuser roller that is offset by the effect of an ambient temperature.

### [Prior Art Document]

### [Patent Document]

[Patent Document 1] Japanese Unexamined Patent Application Publication No.2008-111849 (see FIG. 6)

### SUMMARY OF THE INVENTION

### [Problems to be solved by the Invention]

The following problems still remain in the conventional technologies described above.

In a conventional temperature setting circuit, when the change in a differential output V_{DIF} relative to a compensation temperature is small, the influence by a conversion error of an AD converter configured to convert outputs into digital values is problematically increased, which causes a temperature calculation error of an object to be measured to become large. Specifically, if the differential output V_{DIF} is similar at low and high temperatures and when the change in the differential output V_{DIF} is small, an error caused depending on the resolution of an AD converter may have a great influence on the calculated temperature of an object to be measured.

The present invention has been made in view of the aforementioned circumstances, and an object of the present invention is to provide a temperature detection circuit that can detect a temperature of an object to be measured with high accuracy even when the change in a differential output V_{DIF} relative to a compensation temperature is small.

### [Means for Solving the Problems]

The present invention adopts the following configuration in order to overcome the aforementioned problems. Specifically, a temperature detection circuit according to a first aspect of the present invention comprises: a differential output detection circuit portion having a thermistor for detection (hereafter referred to as "detection thermistor") and a thermistor for compensation (hereafter referred to as "compensation thermistor") configured to amplify a difference between an output of the detection thermistor and an output of the compensation thermistor and to detect it as a first differential output; a second differential amplifier portion configured to amplify a difference between the first differential output and the output of the compensation thermistor and to output it as a second differential output; and an AD converter portion configured to convert the output of the compensation thermistor and the second differential output into digital values.

Since the temperature detection circuit of the first aspect comprises the second differential amplifier portion configured to amplify a difference between the first differential output and the output of the compensation thermistor and to output it as a second differential output, the second differential output can be amplified by the second differential amplifier portion so that the change in the differential output relative to the compensation temperature becomes large even when the change is small, and thus the influence by an error caused during digital conversion by the AD converter portion can be reduced. Accordingly, a temperature of an object to be measured can be calculated with high accuracy from the output of the compensation thermistor and the second differential output both of which has been digitally converted.

A temperature detection circuit according to a second aspect of the present invention is characterized by the temperature detection circuit according to the first aspect, wherein the second differential amplifier portion can adjust the input level of the output of the compensation thermistor using a voltage divider circuit composed of two resistances.

Specifically, in this temperature detection circuit, the second differential amplifier portion can adjust the input level of the output of the compensation thermistor using a voltage divider circuit composed of two resistances, the input level of the output of the compensation thermistor can be readily changed based on the resistance ratio of the two resistances.

An temperature detection circuit according to a third aspect of the present invention is characterized by the temperature detection circuit according to the first or second aspect, wherein the detection thermistor is a temperature sensor for measuring a temperature of a fuser roller used in an image-forming apparatus.

Specifically, in this temperature detection circuit, since the detection thermistor is a temperature sensor for measuring a temperature of a fuser roller used in an image-forming apparatus, a temperature of the fuser roller can be detected with high accuracy, and thus the high-temperature anomaly of the fuser roller can be detected so as to stop the heating of the roller.

### [Effects of the Invention]

According to the present invention, the following effects may be provided.

Specifically, since the temperature detection circuit according to the present invention includes the second differential amplifier portion configured to amplify a difference between the first differential output and the output of the compensation thermistor and to output it as a second differential output, the influence by an error caused during digital conversion can be reduced even when the change in the differential output is small. Accordingly, a temperature of an object to be measured can be calculated with high accuracy.

In particular, when the detection thermistor is used as a temperature sensor for measuring a temperature of a fuser roller used in an image-forming apparatus, a temperature of a fuser roller can be detected with high accuracy, and thus the high-temperature anomaly of the fuser roller can be detected so as to stop the heating of the roller.

### BRIEF DESCRIPTION OF THE DRAWINGS

FIG. 1 is a block diagram showing a temperature detection circuit according to one embodiment of the present invention.
FIG. 2 is a circuit diagram showing the temperature detection circuit according to the present embodiment.
FIG. 3 is a circuit diagram showing a temperature detection circuit according to a Reference Example of the present invention.
FIG. 4 is a graph showing a differential output voltage relative to a compensation temperature in the Reference Example of the present embodiment.
FIG. 5 is a graph showing a second differential output voltage relative to a compensation temperature in the present embodiment.
FIG. 6 is a graph showing the relationship between ΔV1 and ΔV2 and a compensation temperature, when defining V_{DIF} calculated from the differential output voltages after an AD conversion (V_{DIF2-D} and V_{REF-D}) as V_{DIF-CALC} (the present embodiment), and further defining ΔV1 and ΔV2 as difference amounts expressed by the equations of "ΔV1 = V_{DIF}-V_{DIF-D}" and "ΔV2 = V_{DIF}-V_{DIF-CALC}" respectively in the present embodiment.

### DESCRIPTION OF THE EMBODIMENTS

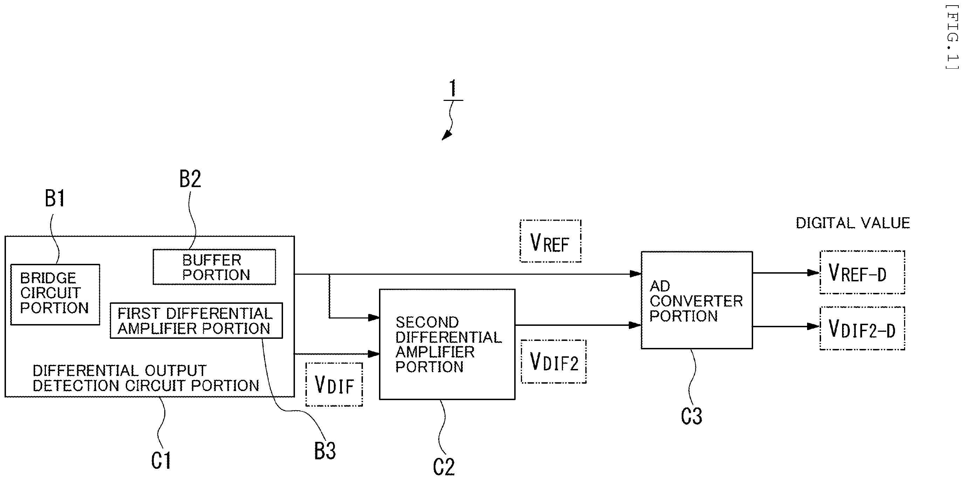

Hereinafter, a temperature detection circuit according to one embodiment of the present invention will be described with reference to FIGs. 1 to 6.

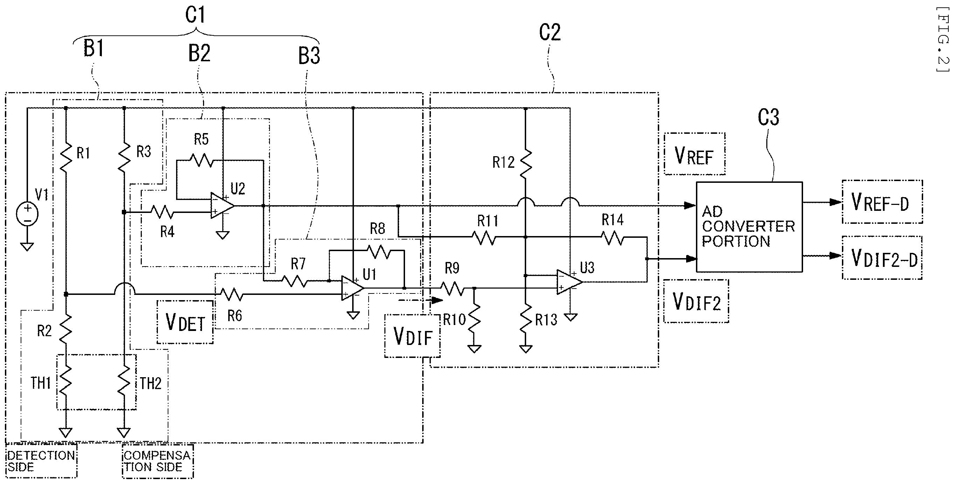

A temperature detection circuit 1 of the present embodiment is a circuit for detecting the high-temperature anomaly of, for example, a fuser roller used in an image-forming apparatus, which, as shown in FIGs. 1 and 2, includes a differential output detection circuit portion C1 having a detection thermistor TH1 and a compensation thermistor TH2 configured to amplify a difference between an output of the detection thermistor TH1 (detection thermistor voltage V_{DET}) and an output of the compensation thermistor TH2 (compensation thermistor voltage V_{REF}) and to detect it as a first differential output V_{DIF}, a second differential amplifier portion C2 configured to amplify a difference between the first differential output and the output of the compensation thermistor TH2 and to output it as a second differential output V_{DIF2}, and an AD converter portion C3 configured to convert the output of the compensation thermistor TH2 and the second differential output V_{DIF2} into digital values.

The second differential amplifier portion C2 can adjust the input level of the output of the compensation thermistor TH2 using a voltage divider circuit composed of two resistances R12 and R13. Specifically, the input level of the output of the compensation thermistor TH2 can be adjusted by dividing the voltage between a power source V1 and ground using two resistances R12 and R13.

The detection thermistor TH1, which is a non-contact temperature sensor that can receive infrared radiation so as to detect a temperature, is arranged opposed to a fuser roller that is an object to be measured so that it can receive infrared radiation radiated from the fuser roller so as to detect a temperature of the fuser roller.

The compensation thermistor TH2 has the same configuration as that of the detection thermistor TH1, but it can detect an ambient temperature (compensation temperature) by blocking the infrared radiation radiated from the fuser roller.

In addition, both of the detection thermistor TH1 and the compensation thermistor TH2 are NTC thermistor elements.

The differential output detection circuit portion C1 includes a bridge circuit portion B1 composed of the detection thermistor TH1, the compensation thermistor TH2, a resistance R1, a resistance R2, and a resistance R3; a buffer portion B2 configured to receive a compensation thermistor voltage V_{REF} from the bridge circuit portion B1 and to output the compensation thermistor voltage V_{REF} with a gain of 1; and a first differential amplifier portion B3 configured to receive the compensation thermistor voltage V_{REF} through the buffer portion B2 and a detection thermistor voltage V_{DET} directly from the detection thermistor so as to amplify the difference (V_{DET}-V_{REF}) and to output a first differential voltage V_{DIF} as a differential output.

The buffer portion B2 is an impedance converting circuit for reducing the output resistance of the compensation thermistor voltage V_{REF}.

The gain of the first differential voltage V_{DIF} depends on the ratio of "resistance R8/resistance R7".

In the second differential amplifier portion C2, a first differential voltage V_{DIF}, which is an output from an operational amplifier U1 of a first differential amplifier portion B3, is input into the non-inverting input terminal of an operational amplifier U3, and the compensation thermistor voltage V_{REF} is input into the inverting input terminal. Furthermore, a second differential voltage V_{DIF2} that has been amplified by the operational amplifier U3 is output from there.

The AD converter portion C3 converts the second differential voltage V_{DIF2} that has been output and the compensation thermistor voltage V_{REF} into digital values V_{DIF2-D} and V_{REF-D} respectively and outputs them.

Note that, in order to prevent saturation of the second differential voltage V_{DIF2} due to the temperature condition of an object to be measured, the resistance constants of the resistances R9 to R14 are adjusted.

As described above, since the temperature detection circuit 1 of the present embodiment includes the second differential amplifier portion C2 configured to amplify a difference between the first differential output V_{DIF} and the output of the compensation thermistor TH2 and to output it as a second differential output, the second differential output can be amplified by the second differential amplifier portion C2 so that the change in the differential output relative to the compensation temperature becomes large even when the change is small, and thus the influence by an error caused during digital conversion by the AD converter portion C3 can be reduced.

Accordingly, a temperature of an object to be measured can be calculated with high accuracy from the compensation thermistor voltage V_{REF-D} and the second differential voltage V_{DIF2-D} both of which have been digitally converted.

In particular, when the detection thermistor TH1 is used as a temperature sensor for measuring a temperature of a fuser roller used in an image-forming apparatus, a temperature of a fuser roller can be detected with high accuracy, and thus the high-temperature anomaly of the fuser roller can be detected so as to stop the heating of the roller.

Furthermore, since the second differential amplifier portion C2 can adjust the input level of the output of the compensation thermistor TH2 using a voltage divider circuit composed of two resistances R12 and R13, the input level of the output of the compensation thermistor TH2 can be readily changed based on the resistance ratio of two resistances R12 and R13.

### [Examples]

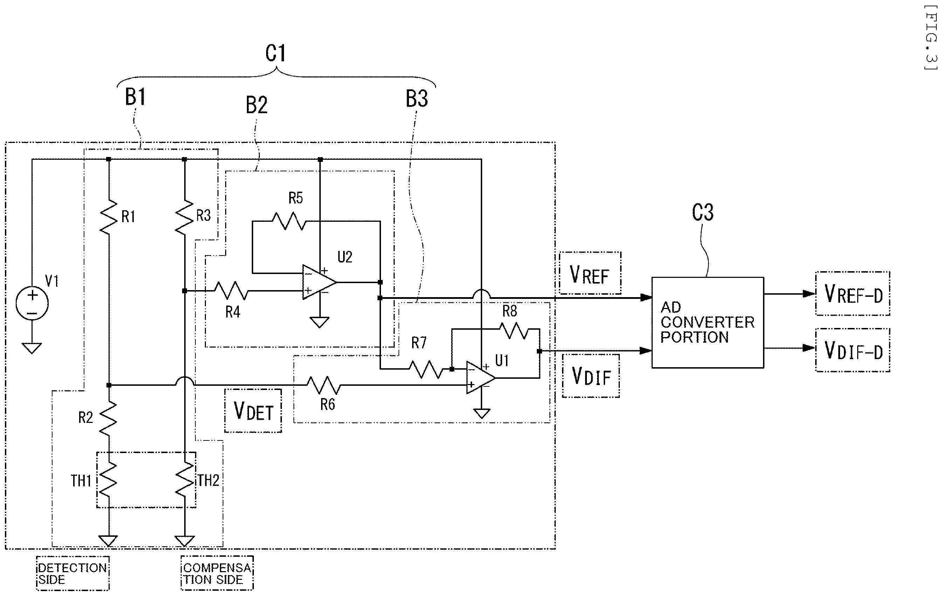

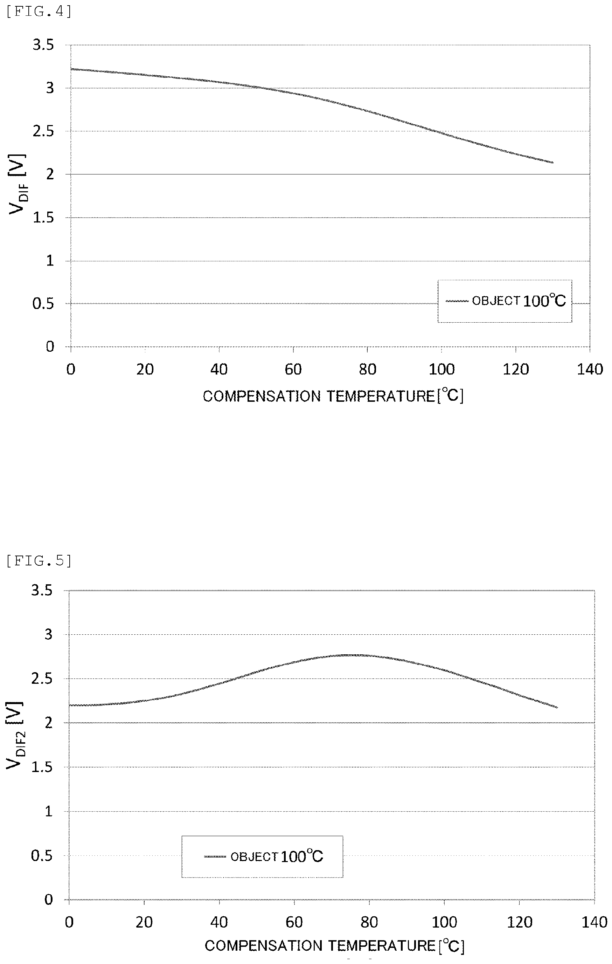

The temperature detection circuit 1 of the present embodiment was examined for the change in a differential output voltage (second differential voltage V_{DIF2}) relative to a compensation temperature (temperature detected by the compensation thermistor TH2). In addition, a reference circuit without the second differential amplifier portion C2 shown in FIG. 3 was also examined for the change in a differential output voltage (differential voltage V_{DIF}) relative to a compensation temperature in a similar manner. These results are shown in FIGs. 4 and 5.

In the case of the reference circuit without the second differential amplifier portion C2, the change in the differential output voltage (differential voltage V_{DIF}) relative to the compensation temperature can be small as shown in FIG. 4, whereas in the case of the temperature detection circuit 1 of the present embodiment, the change in a differential output voltage (second differential voltage V_{DIF2}) relative to a compensation temperature becomes large as shown in FIG. 5. As compared with the detection circuit according to the Reference Example of the present embodiment, a differential output voltage with a large relative change is generated in the detection circuit of the present embodiment, which can improve the accuracy of temperature detection.

In addition, the physical quantity to be detected with high accuracy in the detection circuit according to the Reference Example of the present embodiment and the detection circuit of the present embodiment is an analog output (V_{DIF}) resulting from the thermistor voltage that is output from the differential output detection circuit. Therefore, in the present embodiment, when V_{DIF} calculated from the differential output voltages after AD conversion (V_{DIF2-D} and V_{REF-D}) is defined as V_{DIF-CALC} (the present embodiment), a temperature of an object calculated from an output signal of each detection circuit is influenced mainly by the difference between V_{DIF} and V_{DIF-D} in the Reference Example and the difference between V_{DIF} and V_{DIF-CALC} in the present embodiment, wherein ΔV1 and ΔV2 are defined as difference amounts expressed by the equations of "ΔV1 = V_{DIF}-V_{DIF-D}" and "ΔV2 = V_{DIF}-V_{DIF-CALC}", respectively.

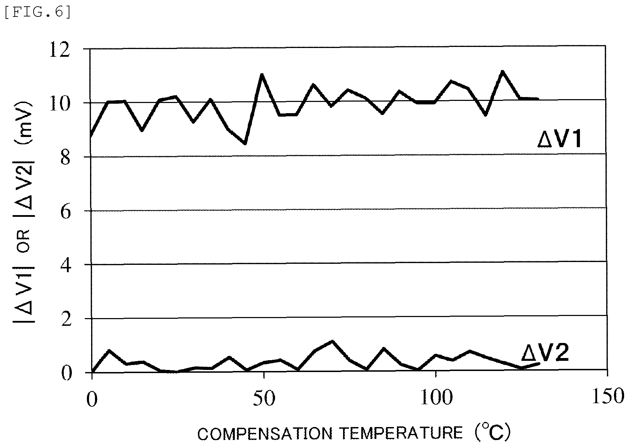

FIG. 6 shows the change of ΔV1 and ΔV2 relative to a compensation temperature when the temperature of an object to be measured was set to be 100°C. Note that ΔV1 and ΔV2 are calculated from output voltages under the condition that the resolution of the AD converter portion C3 is 10-bit and a conversion error is ±3 LSB.

As compared with the detection circuit according to the Reference Example of the present embodiment (ΔV1), the detection circuit of the present embodiment (ΔV2) indicates smaller values over the entire range of the compensation temperature that was examined this time. This result shows that, V_{DIF-CALC} calculated from the voltages after AD conversion (V_{REF-D} and V_{DIF2-D}) has a small error in the detection circuit of the present embodiment compared to the analog output (V_{DIF}) resulting from the thermistor voltage that is output from the differential output detection circuit. Accordingly, a temperature of an object can be detected with high accuracy in the detection circuit of the present embodiment.

Furthermore, a temperature of an object to be measured calculated from the differential voltage V_{DIF-D} and the compensation thermistor voltage V_{REF-D} both of which have been digitally converted in the reference circuit described above and a temperature of an object to be measured calculated from the second differential voltage V_{DIF2-D} and the compensation thermistor voltage V_{REF-D} both of which have been digitally converted in the temperature detection circuit 1 of the present embodiment were analyzed when the temperature of an object to be measured was set to be 100°C and 150°C so as to examine the detection temperature errors relative to the compensation temperatures (25°C, 50°C, 75°C, and 100°C). The results are shown in Table 1.

Note that the above examination was performed under the condition that the resolution of the AD converter portion C3 was 10-bit and the conversion error was ±3 LSB.

**[Table 1]**

| TEMPERATURE OF OBJECT TO BE MEASURED | COMPEN SATION TEMPERA TURE | DETECTION TEMPERATURE ERROR | | |
|---|---|---|---|---|
| | | REFERENCE CIRCUIT | TEMPERATURE DETECTION CIRCUIT OF THE PRESENT INVENTION | 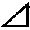 T |
| 100°C | 25°C | 4.6°C | 1.2°C | -3.4°C |
| | 50°C | 2.5°C | 0.0°C | -2.5°C |
| | 75°C | 2.7°C | 0.2°C | -2.4°C |
| | 100°C | 5.9°C | 2.7°C | -3.3°C |
| 150°C | 25°C | 5.3°C | 3.4°C | -2.0°C |
| | 50°C | 2.7°C | 1.2°C | -1.5°C |
| | 75°C | 1.7°C | 0.2°C | -1.5°C |
| | 100°C | 3.1°C | 0.4°C | -2.7°C |

These results show that since the temperature detection circuit 1 of the present embodiment has a small detection temperature error compared with the reference circuit, the influence by a conversion error of the AD converter portion C3 is reduced, and therefore the temperature calculation error of an object is suppressed.

The technical scope of the present invention is not limited to the aforementioned embodiments, but the present invention may be modified in various ways without departing from the scope or teaching of the present invention.

### [Reference Numerals]

1: temperature detection circuit, C1: differential output detection circuit portion, C2: second differential amplifier portion, C3: AD converter portion, TH1: detection thermistor, TH2: compensation thermistor

## Claims

1. A temperature detection circuit comprises:
a differential output detection circuit portion having a detection thermistor and a compensation thermistor configured to amplify a difference between an output of the detection thermistor and an output of the compensation thermistor and to detect it as a first differential output;
a second differential amplifier portion configured to amplify a difference between the first differential output and the output of the compensation thermistor and to output it as a second differential output; and
an AD converter portion configured to convert the output of the compensation thermistor and the second differential output into digital values.

2. The temperature detection circuit according to claim 1, wherein the second differential amplifier portion can adjust the input level of the output of the compensation thermistor using a voltage divider circuit composed of two resistances.

3. The temperature detection circuit according to claim 1, wherein the detection thermistor is a temperature sensor for measuring a temperature of a fuser roller used in an image-forming apparatus.
